# EUROPEAN PATENT SPECIFICATION

(11) **EP 2 858 140 B1**
(45) Date of publication and mention of the grant of the patent: **14.12.2016**
(21) Application number: 13797761.7
(22) Date of filing: 17.05.2013
(51) Int. Cl.: H01M 2/10, B60K 1/04, B60L 11/18

(54) **BATTERY CASE**
BATTERIEGEHÄUSE
BOÎTIER DE BATTERIE

(30) Priority: 31.05.2012 JP 2012124562
(43) Date of publication of application: 08.04.2015
(73) Proprietor: Mitsubishi Jidosha Kogyo Kabushiki Kaisha, Tokyo 108-8410 (JP)
(72) Inventor: NAKAMORI, Yoji, Tokyo 108-8410 (JP)
(74) Representative: Vossius & Partner Patentanwälte Rechtsanwälte mbB
(86) International application number: PCT/JP2013/063808
(87) International publication number: WO 2013/179917

(56) References cited:
- WO-A1-2010/136863
- JP-A- 2006 040 547
- JP-A- 2006 040 547
- JP-A- 2007 302 086
- JP-A- 2007 335 202
- JP-A- 2009 266 652
- JP-A- 2011 195 069
- JP-A- 2012 054 054

## Description

### Technical Field

The present invention relates to a battery case which is mounted on a motor-driven vehicle such as an electric vehicle or a hybrid vehicle.

### Background Art

In a motor-driven vehicle, a driving battery is mounted in a form of a battery pack, and an electric power which is supplied from the battery pack actuates an electric motor thereby to drive the vehicle.

The battery pack includes the driving battery and a battery case for containing and holding this driving battery.

The battery case of this type has a rectangular shape as seen in a plan view. A plurality of cables connected to the battery are drawn out from a side face of the battery case, and connected to an inverter, auxiliary equipments and so on (refer to generic Patent Document 1). In this case, the cables are drawn out through holes which are provided in the battery case, or by way of connectors which are provided on the battery case.

### Prior Art Document

### Patent Document

Patent Document 1: JP-A-2011-195069

### Summary of the Invention

### Problems that the Invention is to Solve

However, in case where another vehicle collides against the motor-driven vehicle, and structural members such as on-vehicle devices, on-vehicle machines are displaced so as to approach the battery case, it is concerned that the structural members interfere with the cables or the connectors, and that constrained forces may be exerted from the structural members on the cables or the connectors. In case where such constrained forces are exerted on the cables or the connectors, it is disadvantageous in enhancing durability of the cables or the connectors.

The invention has been made in view of the above described circumstances, and an object of the invention is to provide a battery case which is advantageous in enhancing durability of cables or connectors which are provided inside and outside the battery case.

### Means for Solving the Problems

In order to achieve the above described object, there is provided, according to the invention, a battery case mounted on a motor-driven vehicle and including a tray which contains a battery for supplying an electric power to a motor for driving the motor-driven vehicle, characterized in that, as seen in a plan view, the tray has a shape of a box having at least two sides and formed with a chamfer at a position where extensions of the two sides intersect, and the tray is provided with a cable passing hole through which a cable for connecting the battery to a device mounted on the motor-driven vehicle can be passed, at a position of the tray where the chamfer is formed. Advantage of the Invention

According to the invention as claimed in claim 1, in case where the battery case is mounted on the motor-driven vehicle having one of the two sides directed to a longitudinal direction of the motor-driven vehicle, a structural member such as an on-vehicle device, an on-vehicle machine is butted against the battery case in the event of collision of the motor-driven vehicle, and the structural member comes into contact with the side of the battery case which is directed to the longitudinal direction. In this case, a space having a triangular shape in a plan view is secured outside the tray, between the position of the tray where the chamfer is formed and the structural member.

Therefore, it is possible to prevent the structural member from exerting a constrained force on the cable, which is advantageous in enhancing durability of the cable.

According to the invention as claimed in claim 2, the cable is arranged inside and outside the battery case at the position of the chamfer forming side wall. Therefore, when the structural member such as the on-vehicle device, the on-vehicle machine is butted against the battery case in the event of collision of the motor-driven vehicle, the space having a triangular shape in a plan view is secured outside the chamfer forming side wall, between the chamfer forming side wall and the structural member. As the results, it is possible to prevent the structural member from exerting a constrained force on the cable, which is advantageous in enhancing durability of the cable.

According to the invention as claimed in claim 3, it is possible to easily use a seal member such as a packing or a grommet, which is advantageous in easily and reliably securing sealing performance, at the position where the cable is arranged inside and outside the battery case.

According to the invention as claimed in claim 4, it is possible to arrange the cables for connecting the battery to the devices mounted on the motor-driven vehicle, respectively at the four corners of the tray. As the results, freeness of layout of the cables can be secured, and a plurality of the cables can be advantageously drawn around, making effective use of a limited space inside the vehicle body.

According to the invention as claimed in claim 5, when the tray is formed by stamping, the invention is advantageous in facilitating the stamping work.

### Brief Description of the Drawings

Fig. 1 is a bottom view of a motor-driven vehicle 10 which is provided with a battery case 40 in an embodiment according to the invention, as seen from below.
Fig. 2 is a plan view of a battery pack 18 having a cover 52 removed, as seen from above.
Fig. 3 is an exploded perspective view showing structure of the battery pack 18.

### Mode for Carrying the Invention

Now, an embodiment of the invention will be described referring to the drawings.

In this embodiment, description will be made referring to a case where the motor-driven vehicle which is provided with the battery case according to the invention is a plug-in hybrid vehicle which employs both an engine and a motor as drive sources.

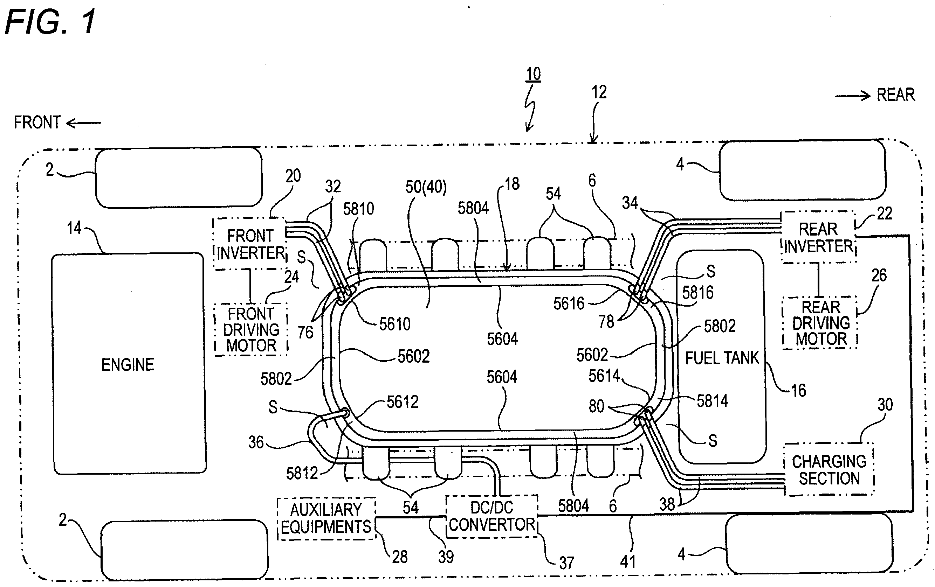

As shown in Fig. 1, the motor-driven vehicle 10 includes a vehicle body 12. The vehicle body 12 is provided with an engine 14, a fuel tank 16, a battery pack 18, a front inverter 20, a rear inverter 22, a front driving motor 24, a rear driving motor 26, auxiliary equipments 28, a charging section 30, and so on. It is to be noted that the front driving motor 24 and the rear driving motor 26 correspond to the motor in this invention.

The engine 14 drives front wheels 2 and rear wheels 4, and is provided between the front wheels 2 on right and left sides.

The fuel tank 16 feeds fuel to the engine 14, and is provided between the rear wheels 4 on right and left sides.

The battery pack 18 is arranged between the front wheels 2 and the rear wheels 4. Accordingly, the engine 14 is positioned in front of the battery pack 18, and the fuel tank 16 is positioned in rear of the battery pack 18.

Four lines of cables including front high voltage cables 32, rear high voltage cables 34, a low voltage cable 36, and charging cables 38 are connected to the battery pack 18 at their one ends. Other ends of the four lines of the cables are respectively connected to devices which are mounted on the vehicle body 12.

The electric power is transmitted between the battery pack 18 and the devices mounted on the vehicle body 12, through these four lines of the cables.

Specifically describing, the front high voltage cables 32 supply a high voltage direct current which is supplied from the battery pack 18, to the front inverter 20. The front driving motor 24 receives an alternating current which is supplied from the front inverter 20, thereby to drive the front wheels 2.

The rear high voltage cables 34 supply a high voltage direct current which is supplied from the battery pack 18, to the rear inverter 22. The rear driving motor 26 receives an alternating current which is supplied from the rear inverter 22, thereby to drive the rear wheels 4.

The low voltage cable 36 supplies a low voltage direct current from a DC/DC converter 37 which is provided outside the battery pack 18, for the purpose of actuating auxiliary components (relays, sensors, ECU, etc.) which are provided inside the battery pack 18, although not shown in the drawings, or performs input and output of control signals.

The auxiliary equipments 28 are connected to the DC/DC converter 37 through the low voltage cable 39, and include head lights, an air conditioner, an audio unit, and so on which are actuated by a low voltage direct current supplied from the DC/DC converter 37. The DC/DC converter 37 is connected to the rear inverter 22 through the high voltage cable 41.

The charging cables 38 supply a charging electric power which is supplied from the charging section 30, to the battery pack 18. The charging section 30 charges the battery pack 18 with the electric power which is supplied from a charging station provided outside the motor-driven vehicle 10 or a commercial power supply.

Then, the battery pack 18 will be specifically described.

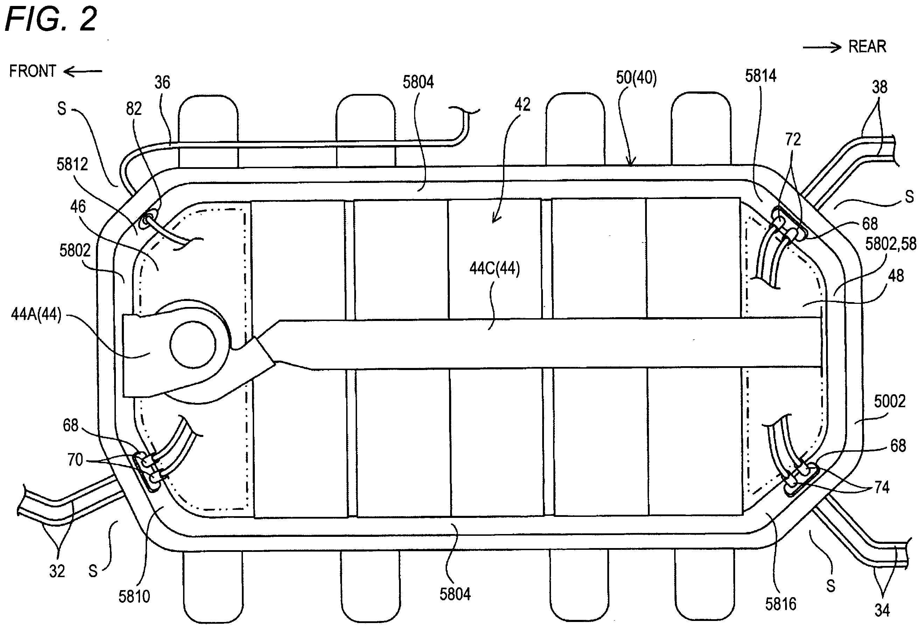

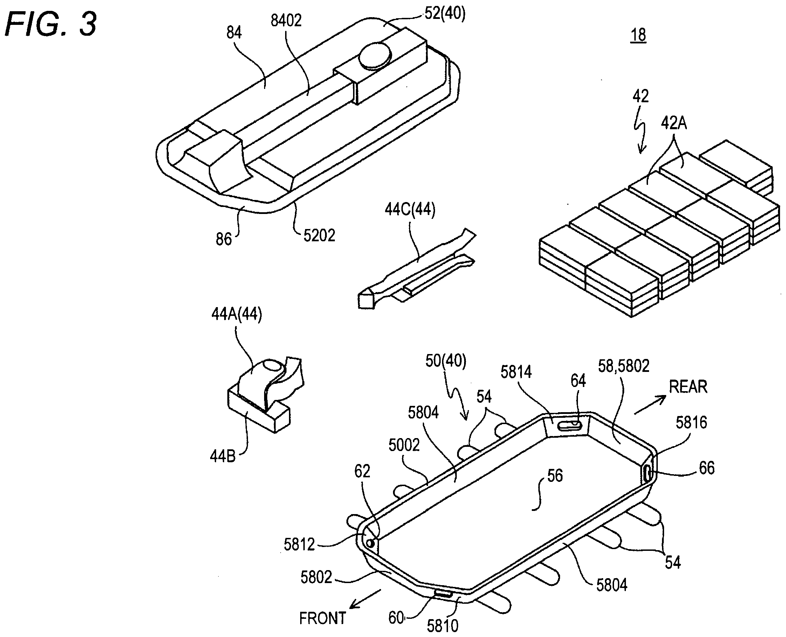

As shown in Figs. 2 and 3, the battery pack 18 includes a battery case 40, and the aforesaid four lines of the cables are provided inside and outside the battery case 40.

Inside the battery case 40, there are contained and held a battery 42, air blowing means 44, first and second junction boxes 46, 48, and so on.

The battery 42 includes a plurality of battery modules 42A which are connected to each other in series, via bus-bars which are not shown. Each of the battery modules 42A is provided with a plurality of battery cells which are connected to each other in series. The battery modules 42A are contained in the battery case 40, in a state where they are held inside a tray 50 with a pressure plate which is not shown, and covered with a cover 52.

The air blowing means 44 includes a blowing fan 44A for circulating the air inside the battery case 40, an evaporator 44B, and a duct 44C for circulating the air inside the battery case 40 thereby to cool the battery 42.

The first and second junction boxes 46, 48 include peripheral devices for actuating the battery modules 42A, and are electrically connected to the battery modules 42A through wiring members which are not shown.

The first junction box 46 is electrically connected to one ends of the front high voltage cables 32 and one end of the low voltage cable 36. The first junction box 46 supplies the high voltage power which is supplied from the battery modules 42A to the front high voltage cables 32, and at the same time, supplies the high voltage power which is supplied from the battery modules 42A to the low voltage cable 36, after the high voltage power has been converted to the low voltage power, using a DC/DC converter.

Moreover, the second junction box 48 is electrically connected to one ends of the rear high voltage cables 34 and one ends of the charging cables 38. The second junction box 48 supplies the high voltage power which is supplied from the battery modules 42A to the rear high voltage cables 34, and at the same time, supplies the charging power which is supplied from the charging cables 38 to the battery modules 42A.

The battery case 40 includes the tray 50 and the cover 52.

The battery case 40 has an oblong shape having its longitudinal direction aligned with a longitudinal direction of the motor-driven vehicle 10, and is arranged in a center part in a lateral direction of the vehicle.

As shown in Fig. 1, the battery case 40 is positioned between a pair of side members 6 below the floor panel which is not shown. The battery case 40 is fitted to the side members 6 by means of fitting members 54.

In this embodiment, the fitting members 54 are respectively provided so as to protrude from right and left sides of a bottom wall of the tray 50 outward in a lateral direction of the tray 50. The four fitting members 54 are provided on each of the right and left sides of the tray 50 at an interval in a longitudinal direction of the tray 50. All the fitting members 54 are respectively fastened to a pair of the side members 6 with bolts.

As shown in Fig. 2, the tray 50 has a shape of a box having at least two sides and provided with chamfers at positions where extensions of these two sides intersect, as seen in a plan view.

In this embodiment, the tray 50 has an oblong shape (a rectangular shape) which is provided with chamfers at four corners, as seen in a plan view.

As shown in Figs. 2 and 3, the tray 50 is formed in a shape of a box which is open at an upper side, having a bottom wall 56, and a side wall 58 which is erected from an outer peripheral edge of the bottom wall 56.

The outer peripheral edge of the bottom wall 56 includes two longer outer peripheral edges 5604 extending rectilinearly in parallel with each other, two shorter outer peripheral edges 5602 extending rectilinearly in parallel with each other in a direction perpendicular to the longer outer peripheral edges 5604. Moreover, the outer peripheral edge of the bottom wall 56 includes first to fourth chamfer forming outer peripheral edges 5610, 5612, 5614, 5616 which extend rectilinearly connecting both ends of the longer outer peripheral edges 5604 and both ends of the shorter outer peripheral edges 5602.

The side wall 58 includes two longer side walls 5804 in a shape of a flat plate which are respectively erected from the longer outer peripheral edges 5604, two shorter side walls 5802 in a shape of a flat plate which are respectively erected from the shorter outer peripheral edges 5602. Moreover, the side wall 58 includes first to fourth chamfer forming side walls 5810, 5812, 5814, 5816 which connect both ends of the longer side walls 5804 and both ends of the shorter side walls 5802.

In this embodiment, the tray 50 is formed by stamping a sheet metal, and in consideration of stamping the tray 50, the side wall 58 is provided with an extracting slope. Specifically, the two longer side walls 5804, the two shorter side walls 5802, and the four chamfer forming side walls 5810 to 5816 are respectively inclined in a direction of going apart from the bottom wall 56, as they are erected from the bottom wall 56.

Moreover, a tray flange 5002 in a flat shape which is folded outward is formed on an entire circumference of an upper end of the side wall 58.

As shown in Fig. 3, first to fourth cable passing holes 60, 62, 64, 66 for enabling the cables 32, 34, 36, 38 to pass through are respectively formed in center parts of the first to fourth chamfer forming side walls 5810, 5812, 5814, 5816.

Each of the first, third and fourth cable passing holes 60, 64, 66 has an elliptical shape having a longer axis directed in a horizontal direction.

As shown in Fig. 2, connecter fitting members 68 are respectively attached to the first, third and fourth cable passing holes 60, 64, 66. Each of the connecter fitting members 68 has a body part in a plate-like shape having a larger profile than the cable passing holes 60, 64, 66, and a connecter fitting hole which is formed in the body part.

The body parts are attached to inner faces of the first, third and fourth chamfer forming side walls 5810, 5814, 5816 around the first, third and fourth cable passing holes 60, 64, 66 with screws or by welding. Packings (sealing members) which are not shown are respectively interposed between the plate-like parts and the inner faces of the chamfer forming side walls 5810, 5814, 5816.

Front connectors 70, rear connectors 72, and charging connectors 74 are respectively fitted to the connecter fitting holes in the body parts of the connecter fitting members 68. It is possible to employ various known means, such as screws or adhesives, for fitting these connectors to the connector fitting holes.

As shown in Fig. 2, the front connectors 70 are electrically connected to the first junction box 46 by means of wiring members which are not shown, and the cable connectors 76 (Fig. 1) which are provided at one ends of the front high voltage cables 32 are connected to the front connectors 70. In this manner, a high voltage power is supplied from the battery 42 to the front high voltage cables 32.

Therefore, the front high voltage cables 32 are arranged inside and outside the battery case 40, in the center part of the first chamfer forming side wall 5810, by way of the first cable passing hole 60, the front connectors 70 and the cable connectors 76.

As shown in Fig. 2, the rear connectors 72 are electrically connected to the second junction box 48 by means of wiring members which are not shown, and the cable connectors 78 (Fig. 1) which are provided at one ends of the rear high voltage cables 34 are connected to the rear connectors 72. In this manner, a high voltage power is supplied from the battery 42 to the rear high voltage cables 34.

Therefore, the rear high voltage cables 34 are arranged inside and outside the battery case 40, at the position of the tray 50 where the fourth chamfer forming side wall 5816 is formed, by way of the fourth cable passing hole 66, the rear connectors 74 and the cable connectors 78.

As shown in Fig. 2, the charging connectors 74 are electrically connected to the second junction box 48 by means of wiring members which are not shown, and the cable connectors 80 (Fig. 1) which are provided at one ends of the charging cables 38 are connected to the charging connectors 74. In this manner, a charging power is supplied to the battery 42 through the charging cables 38.

Therefore, the charging cables 38 are arranged inside and outside the battery case 40, at the position of the tray 50 where the third chamfer forming side wall 5814 is formed, by way of the third cable passing hole 5814, the charging connectors 72, and the cable connectors 80.

As shown in Fig. 2, the second cable passing hole 62 has a round shape.

An annular grommet 82 formed of elastic material such as rubber is fitted to the second cable passing hole 62. One end of the low voltage cable 36 is connected to the first junction box 4 6 through a hole in the grommet 82. Gaps between the grommet 82, the second cable passing hole 62 and the low voltage cable 36 are sealed by elasticity of the grommet 82.

Therefore, the low voltage cable 36 is arranged inside and outside the battery case 40, at the position of the tray 50 where the second chamfer forming side wall 5812 is formed, by way of the second cable passing hole 62 and the grommet 82.

As shown in Fig. 3, the cover 52 is provided with an upper wall 84 in a shape of a rectangular plate, and a side wall 86 which is suspended from a circumference of this upper wall 84.

A lower end of this side wall 86 is formed as a cover flange 5202 having a flat and annular shape which can be engaged with the tray flange 5002.

Moreover, the upper wall 84 is provided with a convex part 8402 in which the wiring members and the air blowing means 44 inside the battery case 40 are contained.

In this embodiment, the cover 52 is formed of synthetic resin.

The cover 52 has a rectangular shape which is provided with chamfers at four corners, when the cover 52 is seen in a plan view.

The cover 52 is mounted on the tray 50, by fastening the cover flange 5202 to the tray flange 5002 with bolts, at a plurality of positions spaced in an extending direction of these flanges, in a state where the cover flange 5202 is superposed on the tray flange 5002.

In a state where the cover 50 is mounted on the tray 50, a containing space is formed between them, and the battery 42, the blowing means 44, the first and second junction boxes 46, 48 are contained and held in this containing space.

Moreover, a packing (a seal member) which is not shown is interposed between the cover flange 5202 and the tray flange 5002.

Accordingly, air tightness of the containing space is enhanced by this packing, the aforesaid packings between the respective connector fitting members 68 and the tray 50, and the aforesaid grommet 82 which is fitted to the second hole.

Then, operation and effects will be described.

According to this embodiment, in case where the tray 50 is seen in a plan view, the tray 50 has such a shape that the chamfers are formed at the positions where the extensions of the two sides intersect. The cables 32, 34, 36, 38 for connecting the battery 42 with the devices which are mounted on the motor-driven vehicle 10 are arranged inside and outside the battery case 40, at the positions of the tray 50 where the chamfers are formed.

Therefore, spaces S having a triangular shape in a plan view are respectively secured outside the tray 50, at the positions where the chamfers are formed. Specifically, these triangular spaces S are interposed between the tray 50 and the structural members such as the engine 14 or the fuel tank 16 existing adjacent to the battery case 40.

For this reason, in case where the structural members such as the engine 14 or the fuel tank 16 existing adjacent to the battery case 40 are displaced so as to approach the tray 50, when the other motor-driven vehicle 10 collides against the motor-driven vehicle 10, for example, the shorter outer peripheral edges 5602 are butted against these structural members, and the shorter side walls 5802 are also butted against the structural members.

Therefore, because of the triangular spaces S which are secured between the structural members and the tray 50, it is possible to prevent the structural members from exerting constrained forces on the cables or the connectors. In this manner, durability of the cables and connectors can be advantageously enhanced.

Moreover, in case where the tray 50 is formed by stamping the sheet metal, in such a shape that the tray 50 is not provided with the chamfers, as seen in a plan view, at the positions where the extensions of the two sides intersect, constrained forces are exerted on corner parts during the stamping work. This is disadvantageous in conducting the stamping work.

In this embodiment, because the tray 50 is provided with the chamfers, as seen in a plan view, at the positions where the extensions of the two sides intersect, there is no position in the tray 50 where the constrained forces are exerted during the stamping work. Therefore, this embodiment is advantageous in enabling the tray 50 to be easily formed by stamping.

Further, in case where the rear high voltage cables 34 and the charging cables 38 are intended to be arranged at the position of the shorter side wall 5802 at the rear side, it is required to arrange the rear high voltage cables 34 and the charging cables 38 in a state forcibly folded at a small curvature, because a space between the shorter side wall 5802 at the rear side and the fuel tank 16 is narrow. Therefore, disadvantage occurs in enhancing freeness in arranging the cables outside the tray 50.

On the contrary, in this embodiment, the center parts of the third and fourth chamfer forming side walls 5814, 5816 are displaced frontward in the motor-driven vehicle 10 than the shorter side wall 5802 at the rear side. Therefore, it is possible to secure the larger spaces S between the center parts of the third and fourth chamfer forming side walls 5814, 5816 and the fuel tank 16. Accordingly, it is possible to arrange the rear high voltage cables 34 and the charging cables 38 in a state obtusely folded at a relatively large curvature, and hence, freeness in arranging the cables outside the tray 50 can be advantageously enhanced.

Moreover, in this embodiment, because the chamfer forming side walls are formed in a shape of a flat plate, it is possible to easily interpose the packings between the connector fitting members 68 and the first, third, and fourth chamfer forming side walls 5810, 5814, 5816. It is also possible to easily fit the grommet 82 to the second cable passing hole 62 of the second chamfer forming side wall 5812. In short, the sealing materials such as the packing and the grommet 82 can be easily fitted, which is advantageous in easily and reliably securing sealing performance at the positions where the cables 32, 34, 36, 38 are arranged inside and outside the battery case 40.

Further, in this embodiment, the tray 50 has such a shape that the chamfers are formed at the four corners of a rectangular shape, as seen in a plan view, and the cables 32, 34, 36, 38 for connecting the battery 42 to the devices mounted on the motor-driven vehicle 10 are arranged inside and outside the battery case 40, at the positions of the tray 50 where the chamfers are formed.

Therefore, it is possible to arrange the cables 32, 34, 36, 38 at the respective positions where the chamfers are formed at the four corners of the tray 50. Accordingly, freeness of layout of the cables 32, 34, 36, 38 can be secured, which is advantageous in drawing a plurality of the cables 32, 34, 36, 38 around, effectively utilizing a limited space in the vehicle body 12.

Moreover, the side wall 58 including the chamfer forming walls 58 are inclined so as to go apart from the side wall 58 as being erected from the bottom wall 56. This is advantageous in facilitating the stamping work, because the tray 50 is formed by stamping the sheet metal.

Although in this embodiment, the description has been made referring to a case where the motor-driven vehicle 10 provided with the battery case 40 is the plug-in hybrid vehicle, it is of course possible to apply the invention to a hybrid vehicle in which the battery 42 is not charged with an external power supply or an electric vehicle in which only a motor is used as a power supply. The invention is extensively applied to the motor-driven vehicles including these plug-in hybrid vehicle, hybrid vehicle, and electric vehicle.

### Description of the Reference Numerals and Signs

10...Motor-driven vehicle, 12...Vehicle body, 18...Battery pack, 20...Front inverter, 22...Rear inverter, 28...Auxiliary equipments, 30...Charging section, 32...Front high voltage cable, 34...Rear high voltage cable, 36...Low voltage cable, 38...Charging cable, 40...Battery case, 42...Battery, 50...Tray, 52...Cover, 56...Bottomwall, 5602...Shorter outer peripheral edge, 5604...Longer outer peripheral edge, 5610...First chamfer forming outer peripheral edge, 5612...Second chamfer forming outer peripheral edge, 5614...Third chamfer forming outer peripheral edge, 5616...Fourth chamfer forming outer peripheral edge, 58...Side wall, 5802...Shorter side wall, 5804...Longer side wall, 5810...First chamfer forming side wall, 5812...Second chamfer forming side wall, 5814...Third chamfer forming side wall, 5816...Fourth chamfer forming side wall

## Claims

1. A battery case (40) mountable on a motor-driven vehicle and including a tray (50) and a caver (52) which contains a battery (42) for supplying an electric power to a motor for driving the motor-driven vehicle, **characterized in that**,
as seen in a plan view, the tray (50) has a shape of a box having at least two sides and formed with a chamfer at a position where extensions of the two sides intersect, and
the tray (50) is provided with a cable passing (60, 62, 64, 66) hole through which a cable for connecting the battery to a device mounted on the motor-driven vehicle can be passed, at a position of the tray where the chamfer is formed.

2. The battery case as claimed in claim 1, **characterized in that**
the tray includes a bottom wall (56), and a side wall (58) which is erected from an outer peripheral edge of the bottom wall (56),
the chamfer is formed by a chamfer forming outer peripheral edge (5610, 5612, 5614, 5616) which is formed in a part of the outer peripheral edge of the bottom wall (56), and by a chamfer forming side wall (5810, 5812, 58174, 5816) which is formed of a part of the side wall erected from the chamfer forming outer peripheral edge, and
the cable passing hole (60, 62, 247, 66) is provided in the chamfer forming side wall (5810, 5812, 5814, 5816).

3. The battery case as claimed in claim 2, **characterized in that**
the chamfer forming side wall is formed in a shape of a flat plate.

4. The battery case as claimed in any one of claims 1 to 3, **characterized in that**
the shape of the box is such a shape that the chamfers are formed at four corners of a rectangular shape.

5. A method of producing a battery case as claimed in any one of claims 2 to 4, **characterized in that**
the side wall including the chamfer forming side wall is inclined so as to go apart from the bottom wall, as being erected from the bottom wall (56), and
the tray (50) is formed by stamping a sheet metal.

## Patentansprüche

1. Batteriegehäuse (40), das in einem motorbetriebenen Fahrzeug einbaubar ist und einen Träger (50) sowie einen Deckel (52) aufweist, und das eine Batterie (42) zum Zuführen von elektrischer Energie zu einem Motor zum Antreiben des motorbetriebenen Fahrzeugs enthält, **dadurch gekennzeichnet, dass**
in Draufsicht der Träger (50) eine Kastenform hat, die mindestens zwei Seiten hat und mit einer Fase an einer Position ausgebildet ist, an der sich Verlängerungen der beiden Seiten schneiden, und
der Träger (50) an einer Position des Trägers, an der die Fase gebildet ist, mit einem Kabeldurchgangsloch (60, 62, 64, 66) versehen ist, durch das ein Kabel zum Verbinden der Batterie mit einer im motorbetriebenen Fahrzeug eingebauten Vorrichtung geführt werden kann.

2. Batteriegehäuse nach Anspruch 1, **dadurch gekennzeichnet, dass** der Träger eine Bodenwand (56) und eine Seitenwand (58) aufweist, die von einer Außenumfangskante der Bodenwand (56) hochsteht,
die Fase durch eine fasenbildende Außenumfangskante (5610, 5612, 5614, 5616),
die in einem Teil der Außenumfangskante der Bodenwand (56) gebildet ist, und durch eine fasenbildende Seitenwand (5810, 5812, 5814, 5816) gebildet ist, die aus einem Teil der Seitenwand gebildet ist, der von der fasenbildenden Außenumfangskante hochsteht, und
das Kabeldurchgangsloch (60, 62, 64, 66) in der fasenbildenden Seitenwand (5810, 5812, 5814, 5816) vorgesehen ist.

3. Batteriegehäuse nach Anspruch 2, **dadurch gekennzeichnet, dass**
die fasenbildende Seitenwand in Form einer flachen Platte ausgebildet ist.

4. Batteriegehäuse nach einem der Ansprüche 1 bis 3, **dadurch gekennzeichnet, dass**
die Form des Kastens eine solche Form ist, dass die Fasen an vier Ecken einer Rechteckform gebildet sind.

5. Verfahren zur Herstellung eines Batteriegehäuses nach einem der Ansprüche 2 bis 4, **dadurch gekennzeichnet, dass**
die Seitenwand mit der fasenbildenden Seitenwand so geneigt ist, dass sie sich von der Bodenwand beim Hochstehen von der Bodenwand (56) entfernt, und
der Träger (50) durch Stanzen eines Blechs gebildet ist.

## Revendications

1. Boîtier de batterie (40) pouvant être monté sur un véhicule motorisé et comportant un plateau (50) et un carter (52) qui contient une batterie (42) pour alimenter un moteur en puissance électrique pour entraîner le véhicule motorisé, **caractérisé en ce que**
en vue en plan, le plateau (50) a la forme d'une boîte ayant au moins deux côtés et formée avec un chanfrein à une position où des extensions des deux côtés se coupent, et
le plateau (50) est pourvu d'un orifice de passage de câble (60, 62, 64, 66) par lequel un câble de raccordement de la batterie à un dispositif monté sur le véhicule motorisé peut être passé, à une position du plateau où le chanfrein est formé.

2. Boîtier de batterie selon la revendication 1, **caractérisé en ce que**
le plateau comporte une paroi basse (56) et une paroi latérale (58) qui est érigée à partir d'un bord périphérique extérieur de la paroi basse (56),
le chanfrein est formé par un bord périphérique extérieur formant chanfrein (5610, 5612, 5614, 5616) qui est formé dans une partie du bord périphérique extérieur de la paroi basse (56), et par une paroi latérale formant chanfrein (5810, 5812, 5814, 5816) qui est formée d'une partie de la paroi latérale érigée à partir du bord périphérique extérieur formant chanfrein, et
l'orifice de passage de câble (60, 62, 64, 66) est prévu dans la paroi latérale formant chanfrein (5810, 5812, 5814, 5816).

3. Boîtier de batterie selon la revendication 2, **caractérisé en ce que**
la paroi latérale formant chanfrein est en forme de plaque plate.

4. Boîtier de batterie selon l'une quelconque des revendications 1 à 3, **caractérisé en ce que**
la forme de la boîte est telle que les chanfreins sont formés aux quatre coins d'une forme rectangulaire.

5. Procédé de fabrication d'un boîtier de batterie tel que revendiqué à l'une quelconque des revendications 2 à 4, **caractérisé en ce que**
la paroi latérale comportant la paroi latérale formant chanfrein est inclinée de façon à s'éloigner de la paroi basse, comme étant érigée à partir de la paroi basse (56), et
le plateau (50) est formé par estampage d'une tôle en métal.
